# EUROPEAN PATENT SPECIFICATION

(11) **EP 2 801 712 B1**
(45) Date of publication and mention of the grant of the patent: **05.10.2016**
(21) Application number: 12738010.3
(22) Date of filing: 04.01.2012
(51) Int. Cl.: F01N 3/20, F01N 3/025, F01N 3/36, F01N 3/38

(54) **EXHAUST-HEATING DEVICE**
ABGASERHITZUNGSVORRICHTUNG
DISPOSITIF DE CHAUFFAGE D'ÉCHAPPEMENT

(43) Date of publication of application: 12.11.2014
(73) Proprietor: TOYOTA JIDOSHA KABUSHIKI KAISHA, Toyota-shi, Aichi-ken, 471-8571 (JP)
(72) Inventor: TSUJIMOTO, Kenichi, Toyota-shi, Aichi-ken, 471-8571 (JP); INOUE, Mikio, Toyota-shi, Aichi-ken, 471-8571 (JP)
(74) Representative: Intès, Didier Gérard André
(86) International application number: PCT/JP2012/000013
(87) International publication number: WO 2013/102948

(56) References cited:
- JP-A- 2006 112 401
- JP-A- 2010 249 013
- JP-A- 2010 249 013
- JP-A- 2010 249 015
- JP-A- 2011 099 582
- JP-A- 2011 106 430

## Description

### Technical Filed

The present invention relates to an exhaust heating apparatus for increasing a temperature of an exhaust gas for activation of an exhaust emission purifier for an internal combustion engine and maintenance of an active state thereof.

### Background Art

In recent years, for complying with strict exhaust gas regulations applied to an internal combustion engine, it is necessary to activate an exhaust emission purifier at the time of starting up, or to maintain the exhaust emission purifier in an active state during the operation of the internal combustion engine. To this end, Japanese Patent Laid-Open Nos. 2010-249013 and 2010-249015 have both proposed an internal combustion engine in which an exhaust gas heating system is incorporated in an exhaust passage upstream of the exhaust emission purifier. The exhaust gas heating system promotes activation of the exhaust emission purifier, or maintains the active state thereof by supplying a burning gas made to generate in the exhaust gas to the exhaust emission purifier placed downstream thereof. For this purpose, the exhaust gas heating system is generally provided with an igniting unit such as a glow plug for generating the burning gas by heating and igniting the fuel, and a fuel supplying valve for injecting the fuel toward the igniting unit.

In addition, the exhaust heating apparatuses disclosed in Japanese Patent Laid-Open Nos. 2010-249013 and 2010-249015 both propose a structure that a pipe element connected to an exhaust pipe is provided and a collision member is arranged in a combustion portion defined by the pipe element for receiving fuel from a fuel supply valve. A heat generating portion in a glow plug is positioned between the collision member and the fuel supply valve to accelerate mixing of an exhaust gas flowing into the combustion portion from an exhaust passage by the collision member and fuel injected from the fuel supply valve.

### Summary of Invention

### Technical Problem

In Japanese Patent Laid-Open Nos. 2010-249013 and 2010-249015, a flow speed of an exhaust gas flowing into the combustion portion from the exhaust passage is reduced by the collision member to form stagnation of the exhaust gas in a combustion region in the surroundings of the collision member. Therefore it is difficult to efficiently flow a new exhaust gas into the combustion portion from the exhaust passage. Further, as the flow speed of the exhaust gas flowing in the exhaust passage increases, pressure losses in the combustion portion become larger by a venturi effect, and therefore it is furthermore difficult to flow a part of the exhaust gas flowing in the exhaust passage into the combustion portion. As a result it is difficult to ignite the fuel or even if the fuel is ignited, an oxygen concentration in the combustion portion rapidly decreases following combustion of the fuel, and there is a possibility that the misfiring occurs immediately. Since inflow of the exhaust gas into the combustion portion is not efficiently made, it is also difficult to efficiently flow out a combustion gas generated in the combustion portion to the exhaust passage, and an improvement thereon is desired.

An object of the present invention is to provide an exhaust heating apparatus which can continue to perform ignition and combustion of fuel without inviting a reduction in oxygen concentration, and can efficiently flow out a combustion gas to an exhaust passage.

### Solution to Problem

An exhaust heating apparatus according to the present invention comprises a housing defining a firing chamber, the housing being jointed to an exhaust pipe defining an exhaust passage, the exhaust pipe being connectable between an internal combustion engine and an exhaust emission purifier, a fuel supply valve for injecting fuel into the firing chamber communicating with the exhaust passage through a junction port formed on a wall of the exhaust pipe, and ignition means including a heat generating portion for igniting the fuel injected into the firing chamber, the heat generating portion of the ignition means being arranged in the vicinity of the downstream wall surface in the housing, wherein a part of the exhaust gas flowing in the exhaust passage flows from the junction port into the firing chamber so that ignition of a mixture of exhaust gas and fuel injected into the firing chamber generates a combustion gas that flows out from the junction port to the exhaust passage together with exhaust gas newly flowing into the firing chamber; the exhaust heating apparatus is characterized in that an angle between a wall surface in the exhaust pipe positioned upstream of the junction port in the exhaust passage and adjacent to the junction port, and an upstream wall surface in the housing positioned upstream of the exhaust passage, is set to an obtuse angle, and an angle between a wall surface in the exhaust pipe positioned downstream of the junction port in the exhaust passage and adjacent to the junction port, and a downstream wall surface in the housing positioned downstream of the exhaust passage, is set to an obtuse angle. A posture of the fuel supply valve is set to the downstream wall surface in the housing such that the fuel injected from the fuel supply valve collides with the downstream wall surface in the housing and splashes toward the exhaust passage through the junction port.

In the present invention, the exhaust gas flowing in the exhaust passage along the wall surface in the exhaust pipe is guided to the upstream wall surface in the housing extending along the wall surface in the exhaust pipe from the junction port to flow into the firing chamber. The exhaust gas flown into the firing chamber forms a new mixture together with fuel injected from the fuel supply valve, which is ignited by being subjected to heating from the heat generating portion in the ignition means for combustion. The generated combustion gas is pushed out along the downstream wall surface in the housing by the exhaust gas flowing into the firing chamber, guided to the wall surface in the exhaust pipe extending along the downstream wall surface in the housing from the junction port, and again flows into the exhaust passage.

In the exhaust heating apparatus according to the present invention, the housing may further define a fuel injection chamber communicating with the firing chamber, the fuel injection chamber is further recessed from a section of the upstream wall surface of the housing at a distance from the junction port, and the fuel supply valve may inject the fuel into the firing chamber through the fuel injection chamber.

### Advantageous Effects of Invention

According to the exhaust heating apparatus in the present invention, after a part of the exhaust gas flowing in the exhaust passage along the wall surface in the exhaust pipe flows into firing chamber along the upstream wall surface in the housing, the part of the exhaust gas can again flow out along the downstream wall surface in the housing from the firing chamber to the exhaust passage efficiently. As a result, the stagnation of the exhaust gas is difficult to be generated in the firing chamber and a reduction in the oxygen concentration in the firing chamber is avoidable, making it possible to suppress the misfiring of the ignited fuel for delivering the combustion gas to the exhaust passage efficiently.

In a case of defining the fuel injection chamber recessed from the section of the upstream wall surface in the housing, the exhaust gas flowing into the firing chamber along the upstream wall surface in the housing does not collide with the fuel supply valve, and therefore soot, unburned HC and the like contained in the exhaust gas are difficult to be attached to a nozzle of the fuel supply valve. As a result, defects due to clogging of the fuel supply valve are not generated, and in addition, it is possible to suppress heat deterioration of the fuel supply valve by exhaust heat.

In a case of setting the posture of the fuel supply valve in such a manner that the fuel injected from the fuel supply valve collides with the downstream wall surface in the housing to plash toward the exhaust passage, the fuel injected from the fuel supply valve does not stagnate or remain in the firing chamber, making it possible to certainly guide the fuel to the exhaust passage.

Since the heat generating portion in the igniting means is arranged in close proximity to the downstream wall surface in the housing, the downstream wall surface in the housing is heated by the heat generating portion to increase a temperature thereof. As a result, vaporization of the attached fuel herein can be accelerated to enhance a combustion efficiency of the fuel.

Since the exhaust emission purifier is jointed to the exhaust pipe positioned downstream of the housing in the exhaust passage, the exhaust gas in a heated state can be guided to the exhaust emission purifier to efficiently perform activation of the exhaust emission purifier and maintenance of an active state thereof.

### Brief Description of Drawings

[Fig. 1] Fig. 1 is an outline diagram showing an engine system in an embodiment in which the present invention is applied to a vehicle mounting a multi-cylinder internal combustion engine of a compression ignition type thereon;
[Fig. 2] Fig. 2 is a control block diagram of a major part in the embodiment shown in Fig. 1;
[Fig. 3]Fig. 3 is an enlarged cross section of a major part in an exhaust heating apparatus in the embodiment shown in Fig. 1; and
[Fig. 4]Fig. 4 is a cross section which shows another embodiment of an exhaust heating apparatus according to the present invention and which is similar to Fig. 3.

### Description of Embodiments

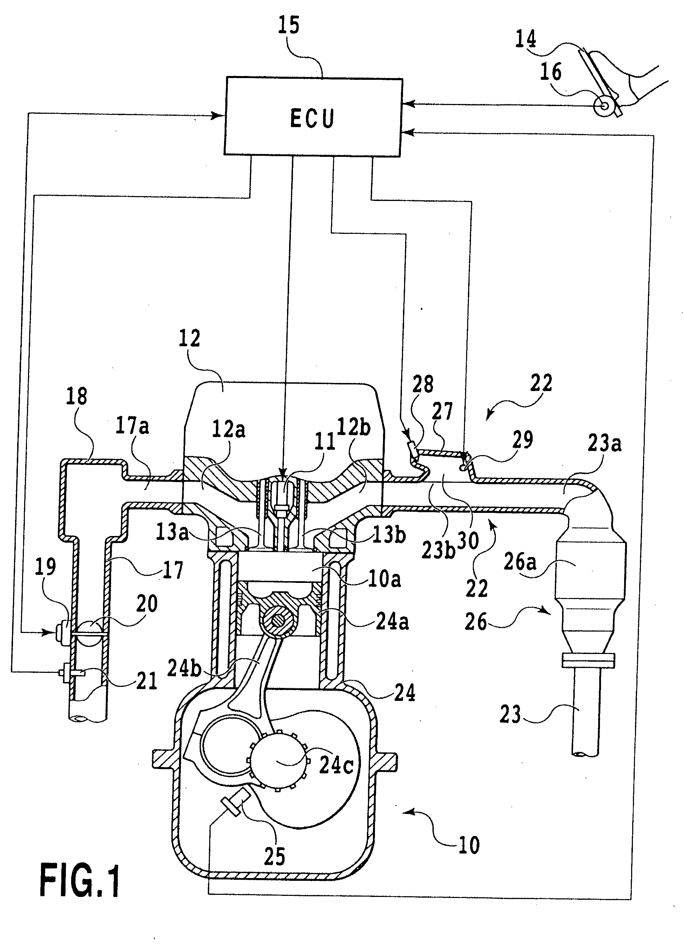

An embodiment in which an exhaust heating apparatus according to the present invention is applied to a compression ignition type internal combustion engine will be in detail explained with reference to Fig. 1 to Fig. 4. The present invention is not, however, limited to the embodiment, and the construction thereof may be freely modified corresponding to required characteristics. The present invention is effectively applied to a spark ignition type internal combustion engine in which gasoline, alcohol, LNG (Liquefied Natural Gas) or the like is used as fuel to be ignited by a spark plug, for example.

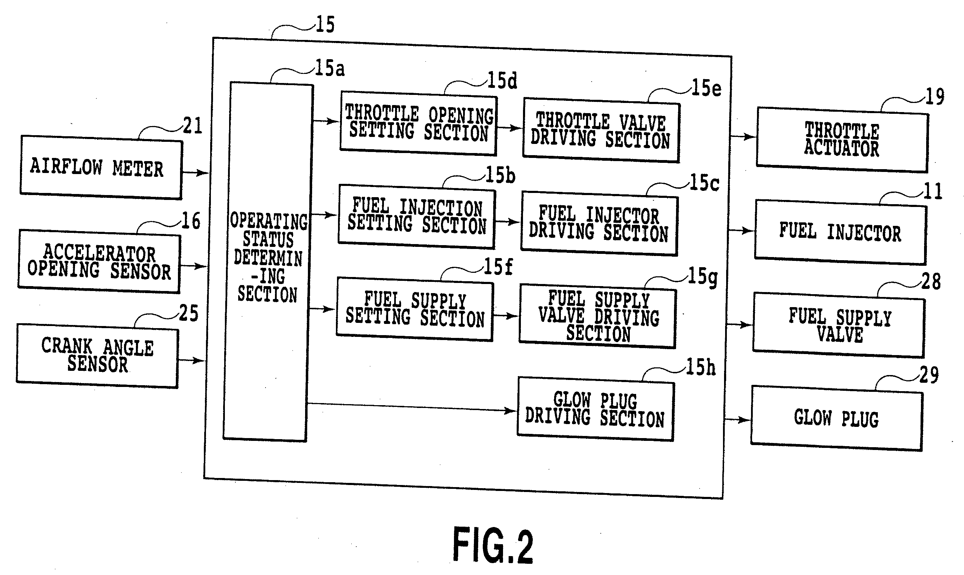

A primary portion of an engine system in the present embodiment is schematically shown in Fig. 1, and a control block of the primary portion is schematically shown in Fig. 2. In Fig. 1, in addition to a valve-operating mechanism for intake and exhaust in an engine 10 and a muffler, an exhaust turbo-charger, EGR system and the like which is generally provided as auxiliary equipments for the engine 10 are omitted. Furthermore, it should be also noted that some of various sensors needed for a smooth operation of the engine 10 are also omitted for convenience.

The engine 10 in the embodiment is a multi-cylinder internal combustion engine of the compression ignition system in which spontaneous ignition is performed by directly injecting light oil as fuel from a fuel injector 11 into a combustion chamber 10a in a compression state. However, according to the characteristic of the present invention, the engine 10 also may be a single-cylinder internal-combustion engine.

A valve actuating mechanism (not shown) including an intake valve 13a for opening and closing the intake port 12a and an exhaust valve 13b for opening and closing the exhaust port 12b is incorporated in the cylinder head 12 in which an intake port 12a and an exhaust port 12b are formed so as to communicate with the combustion chamber 10a, respectively. The fuel injector 11 bordered on the center of the upper end of the combustion chamber 10a is also mounted on the cylinder head 12 so as to be positioned between the intake valve 13a and the exhaust valve 13b.

The amount and the injection timing of the fuel injected from the fuel injector 11 into the combustion chamber 10a is controlled by the Electronic Control Unit (ECU) 15 based on the vehicle operating condition including the depressing travel of the accelerator pedal 14 by the driver. The depressing travel of the accelerator pedal 14 is detected by an accelerator opening sensor 16, and the detection information is outputted to the ECU 15.

The ECUI 15 includes an operating status determining section 15a for determining the vehicle operating condition based on the information from this accelerator opening sensor 16 and various sensors which will be described later, a fuel injection setting section 15b, and a fuel injector driving section 15c. The fuel injection setting section 15b sets, based on the determination result by the operating status determining section 15a, the injection amount and the injection timing of fuel from the fuel injector 11. The fuel injector driving section 15c controls the operation of fuel injector 11 so that the fuel in an amount set by the fuel injection setting section 15b is injected from the fuel injector 11 at the set timing.

A surge tank 18 is connected to the cylinder head 12 in such a manner as to be communicated with the intake port 12a, and is formed in the middle of the intake pipe 17 defining the intake passage 17a together with the intake port 12a. A throttle valve 20 is incorporated in the intake pipe 17 upstream of the surge tank 18 for adjusting an opening of the intake passage 17a through a throttle actuator 19. In addition, an airflow meter 21 is mounted to the intake pipe 17 upstream of the throttle valve 20 for detecting a flow quantity of intake air flowing in the intake passage 17a, which is outputted to the ECU 15.

The above ECU 15 further includes a throttle opening setting section 15d and a throttle valve driving section 15e. The throttle opening setting section 15d sets an opening of the throttle valve 20 based upon a depressing amount of the accelerator pedal 14 and also a determination result in the above operating status determining section 15a. The throttle valve driving section 15e controls an operation of the throttle actuator 19 in such a manner that the throttle valve 20 opens to an opening degree set in the throttle opening setting section 15d.

A cylinder block 24 in which a piston 24a reciprocates is provided with a crank angle sensor 25 mounted thereon for detecting a rotational phase of a crank shaft 24c connected through a connecting rod 24b to the piston 24a, that is, a crank angle thereof, which is outputted to the ECU 15. The operating status determining section 15a in the ECU 15 obtains in real time the rotational phase of the crank shaft 24c, an engine rotational speed, further, a vehicle speed and the like, based upon information from the crank angle sensor 25.

An exhaust pipe 23 connected to the cylinder head 12 in such a manner as to be communicated with the exhaust port 12b defines an exhaust passage 23a together with the exhaust port 12b. An exhaust emission purifier 26 is mounted in the middle of the exhaust pipe 23 upstream of a muffler (not shown) mounted to a downstream end portion of the exhaust pipe 23 for rendering harmful substances generated by combustion of a mixture in the combustion chamber 10a harmless. The exhaust emission purifier 26 in the present embodiment includes at least an oxidation catalytic converter 26a and, other than this, possibly incorporates a DPF (Diesel Particulate Filter), NOx, an absorption catalyst, and the like therein. The oxidation catalytic converter 26a oxidizes, that is, burns mainly unburned gases contained in the exhaust gas.

Therefore intake air supplied into the combustion chamber 10a from the intake passage 17a forms a mixture with the fuel injected into the combustion chamber 10a from the fuel injector 11. In addition, the mixture is naturally-ignited in the vicinity of a compression top dead center of a piston 24a for combustion, and an exhaust gas generated thereby is discharged through the exhaust emission purifier 26 from the exhaust pipe 23 to an atmosphere.

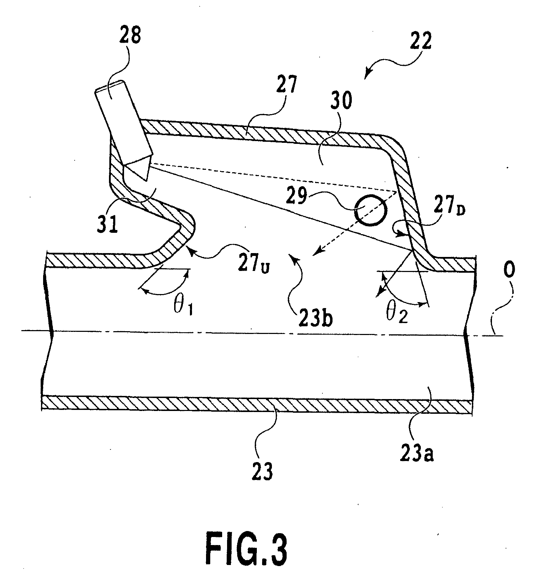

An exhaust heating unit 22 is arranged in the middle of the exhaust pipe 23 upstream of the exhaust emission purifier 26 to generate heated gas, which is supplied to the exhaust emission purifier 26 arranged to the downstream side thereof for performing activation and maintaining an active state thereof. Fig. 3 is a diagram shown by extracting and enlarging a major part of the exhaust heating apparatus 22. The exhaust heating unit 22 in the present embodiment is provided with a housing 27, a fuel supply valve 28 and a glow plug 29.

The housing 27 is connected to the engine 10 and coupled to the middle of the exhaust pipe 23 defining the exhaust passage 23a to define a firing chamber 30. The housing 27 in the present embodiment further defines a fuel injection chamber 31 recessed from a section of an upstream wall surface 27_{U} in the housing 27 at a distance from a junction port 23b formed on a wall of the exhaust pipe 23 to be communicated with the firing chamber 30. The fuel injection chamber 31 is recessed in a direction (left side in Fig. 3) along the upstream side of the exhaust passage 23a from the firing chamber 30, and a nozzle in the fuel supply valve 28 is exposed thereto.

The fuel supply valve 28 has a basic configuration similar to that of the regular fuel injector 11 and is configured to be capable of injecting an arbitrary quantity of fuel in a pulse shape from the fuel injection chamber 31 to the firing chamber 30 by any time interval. The fuel supply valve 28 in the present embodiment is designed to inject fuel from the fuel injection chamber 31 to the firing chamber 30 communicating with the exhaust passage 23a through the junction port 23b formed on the wall in the exhaust pipe 23. The posture of the fuel supply valve 28 is set to a downstream wall surface 27_{D} in the housing 27 such that the fuel injected from the fuel supply valve 28 collides with the downstream wall surface 27_{D} in the housing 27, passes through the junction port 23b, and plashes toward the exhaust passage 23a. In addition, the fuel supply valve 28 is mounted through a bracket (not shown) to the housing 27 such that the set posture is maintained.

A quantity of fuel per one time supplied to the exhaust passage 23a from the fuel supply valve 28 is set based upon an operating condition of a vehicle including an intake quality detected by an airflow meter 21 and an air-fuel ratio by a fuel supply setting section 15f in the ECU 15.

A fuel supply valve driving section 15g in the ECU 15 controls an operation of the fuel supply valve 28 in such a manner that the fuel of the quantity set in the fuel supply setting section 15f is injected in the set cycle from the fuel supply valve 28.

The glow plug 29 as the ignition means in the present invention is connected through a glow plug driving section 15h in the ECU 15 as an ON/OFF switch to an in-vehicle power source (not shown). Therefore switching of power supply and non-power supply to the glow plug 29 is controlled by the glow plug driving section 15h in the ECU 15 according to a preset program. The glow plug 20 includes a heat generating portion 29a for igniting fuel injected to the firing chamber 30. The heat generating portion 29a is arranged in the vicinity of the downstream wall surface 27_{D} in the housing 27 in such a manner as to be positioned in the central portion of an injection region of fuel injected from the fuel supply valve 28.

An angle θ₁ between the wall surface in the exhaust pipe 23 positioned upstream of the junction port 23b in the exhaust passage 23a and adjacent to the junction port 23b, and the upstream wall surface 27_{U} in the housing 27 positioned upstream of the exhaust passage 23a, is set to an obtuse angle. In other words, the upstream wall surface 27_{U} in the housing 27 is inclined such that a distance from a center axis O of the exhaust pipe 23 to the upstream wall surface 27_{U} in the housing 27 is longer toward the downstream side of the exhaust passage 23a and an inclination angle thereof is set to a sharp angle. Therefore a part of the exhaust gas flowing in the exhaust passage 23a from the upstream side of the junction port 23b can be guided to the firing chamber 30 without resistance.

An angle θ₂ between the wall surface in the exhaust pipe 23 positioned downstream of the junction port 23b in the exhaust passage 23a and adjacent to the junction port 23b, and the downstream wall surface 27_{D} in the housing 27 positioned downstream in the exhaust passage 23a, is also set to an obtuse angle. In other words, the downstream wall surface 27_{D} in the housing 27 is inclined such that a distance from the center axis O of the exhaust pipe 23 to the downstream wall surface 27_{D} in the housing 27 is shorter toward the downstream side of the exhaust passage 23a and an inclination angle thereof is set to a sharp angle. Therefore the exhaust gas flown into the firing chamber 30 can again flow out from the junction port 23b to the exhaust passage 23a without a large resistance.

In this manner, the upstream wall surface 27_{U} and the downstream wall surface 27_{D} in the housing 27 can efficiently flow a part of the exhaust gas flowing in the exhaust passage 23a into the firing chamber 30, and can again smoothly flow out it together with the combustion gas generated herein to the exhaust passage 23a.

In the present embodiment, in a case where when the engine 10 is in a motoring state, that is, in a case where, in the middle where the engine 10 is in operation, an opening of the accelerator pedal 14 becomes zero and the fuel is not injected from the fuel injector 11, exhaust heat processing is executed. That is, the aforementioned fuel supply valve 28 injects the fuel to perform heating of the exhaust gas flowing in the exhaust passage 23a. Therefore when the engine 10 turns into a fuel cut state, the fuel supply valve 28 injects the fuel through the fuel injection chamber 31 to the firing chamber 30 as needed, and thereby the exhaust gas flowing in the exhaust passage 23a increases in temperature to maintain an active state of the oxidation catalytic converter 26a in the exhaust emission purifier 26. In this case, the exhaust gas flowing in the exhaust passage 23a along the wall surface in the exhaust pipe 23 is guided to the upstream wall surface 27_{U} in the housing 27 extending along the wall surface in the exhaust pipe 23 from the junction port 23b to flow into the firing chamber 30. The exhaust gas flown into the firing chamber 30 forms a new mixture together with fuel injected from the fuel supply valve 28, which is ignited by being subjected to heating from the heat generating portion 29a in the glow plug 29 for combustion. The generated combustion gas is pushed out along the downstream wall surface 27_{D} in the housing 27 by the exhaust gas newly flowing into the firing chamber 30, guided to the wall surface in the exhaust pipe 23 extending along the downstream wall surface 27_{D} in the housing 27 from the junction port 23b, and again flows into the exhaust passage 23a.

According to the present embodiment, since a part of the exhaust gas all the time flows into the firing chamber 30 and flows out to the exhaust passage 23a together with the combustion gas, ignition of the fuel is stable and the combustion efficiency also improves. As a result, a high combustion dispersing performance can be achieved.

There are some cases where when the mounting position of the housing 27 to the exhaust pipe 23 is not in the straight pipe section of the exhaust pipe 23 according to the aforementioned embodiment, but is in a curved pipe section, the flow of the exhaust gas can be more preferably controlled.

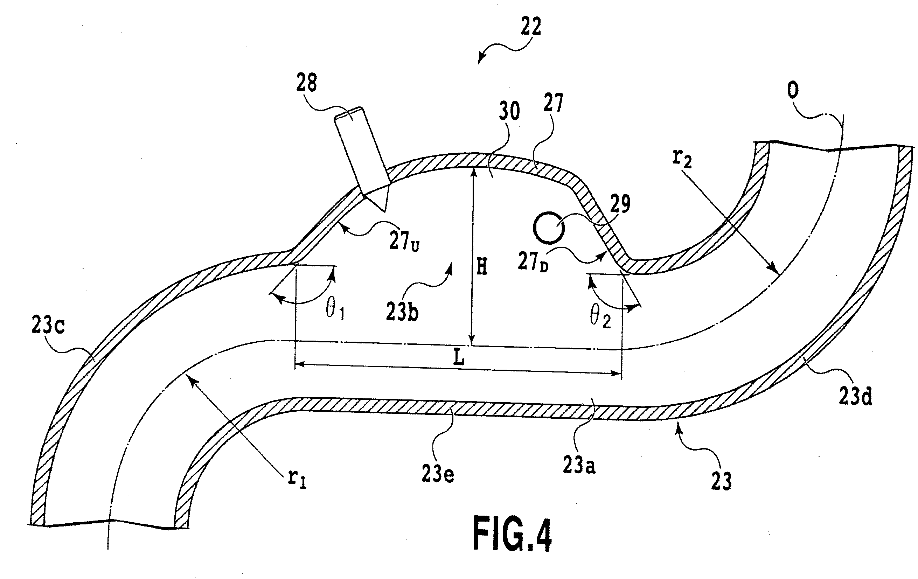

Fig. 4 shows a cross section configuration of a major part in another embodiment of the exhaust heating unit 22 in the present invention. Components identical to those in the previous embodiment are referred as to identical codes and an overlap explanation is omitted. That is, the exhaust pipe 23 comprises a first bend portion 23c curved in a first radius of curvature r₁, a second bend portion 23d curved in a second radius of curvature r₂ in a reverse direction to the fist bend portion 23c, and a inflection part 23e between the first bend portion 23c and the second bend portion 23d. The housing 27 is provided in an outer peripheral side of the first bend portion 23c (in other words, in an inner peripheral side of the second bend portion 23d) in the inflection part 23e. That is, the housing 27 is set such that the exhaust gas passing through the exhaust passage 23a defined by the first bend portion 23c tends to easily flow from the junction port 23b into the firing chamber 30 by inertia. At the same time, consideration is made such that the gas flowing out from the firing chamber 30 through the junction port 23b to the exhaust passage 23a passes transversely across the second bend portion 23d to collide with the inner wall in the outer peripheral side. Therefore flow of the exhaust gas flowing from the upstream side to the downstream side of the junction port 23b is blocked, and a part of the exhaust gas tends to more easily flow into the firing chamber 30. In view of the above, it is also effective to connect the upstream wall surface 27_{U} and the upstream wall surface 27_{D} with a continuously curved wall surface to move the exhaust gas along the wall surface in the housing 27 from the junction port 23b, which is again flown smoothly out from the junction port 23b to the exhaust passage 23a. Further, in a case where a connecting section between the exhaust pipe 23 and the housing 27, and an entire inner wall of the housing 27 are formed with a continuous curved surface, the exhaust gas can more smoothly flow from the exhaust passage 23a into the firing chamber 30, and again flow out from the firing chamber 30 to the exhaust passage 23a.

In the present embodiment, a length L of the junction port 23b along the flowing direction of the exhaust gas flowing in the exhaust passage 23a is set to be longer than a height H from the center axis O of the exhaust pipe 23 to the wall surface in the housing 27 at the remotest position therefrom. Therefore a part of the exhaust gas tends to more easily flow into the firing chamber 30.

It is possible to provide a collision plate as disclosed in PTL1 in the firing chamber 30 between the heat generating portion 29a in the glow plug 20 and the downstream wall surface 27_{D} in the housing 27. The collision plate can receive fuel supplied from the fuel supply valve 28 to accelerate vaporization of the fuel and dispersion thereof toward the glow plug 29.

It should be noted that, the present invention should be interpreted based only upon the matters described in claims, and in the aforementioned embodiments, all changes and modifications included within the spirit of the present invention can be made other than the described matters. That is, all the matters in the described embodiments are made not to limit the present invention, but can be arbitrarily changed according to the application, the object and the like, including every construction having no direct relation to the present invention.

### Reference Signs List

10 Engine
10a Combustion chamber
11 Fuel injector
12 Cylinder head
12a Intake port
12b Exhaust port
13a Intake valve
13b Exhaust valve
14 Accelerator pedal
15 ECU
15a Operating status determining section
15b Fuel injection setting section
15c Fuel injector driving section
15d Throttle opening setting section
15e Throttle valve driving section
15f Fuel supply setting section
15g Fuel supply valve driving section
15h Glow plug driving section
16 Accelerator opening sensor
17 Intake pipe
17a Intake passage
18 Surge tank
19 Throttle actuator
20 Throttle valve
21 Airflow meter
22 Exhaust heating unit
23 Exhaust pipe
23a Exhaust passage
23b Junction port
23c First bend portion
23d Second bend portion
23e Inflection part
24 Cylinder block
24a Piston
24b Connecting rod
24c Crankshaft
25 Crank angle sensor
26 Exhaust emission purifier
26a Oxidation catalytic converter
27 Housing
27_{U} Upstream wall surface
27_{D} Downstream wall surface
28 Fuel supply valve
29 Glow plug
30 Firing chamber
31 Fuel injection chamber
θ₁ ANGLE BETWEEN WALL SURFACE OF EXHAUST PIPE AND UPSTREAM WALL SURFACE IN HOUSING
θ₂ ANGLE BETWEEN WALL SURFACE OF EXHAUST PIPE AND DOWNSTREAM WALL SURFACE IN HOUSING
O CENTER AXIS OF EXHAUST PIPE
r₁ RADIUS OF CURVATURE OF FIRST BEND PORTION
r₂ RADIUS OF CURVATURE OF SECOND BEND PORTION
L LENGTH OF JUNCTION PORT ALONG THE FLOWING DIRECTION OF EXHAUST GAS
H HEIGHT FROM CENTER AXIS OF EXHAUST PIPE TO WALL SURFACE IN HOUSING AT THE REMOSTEST POSITION THEREFROM

## Claims

1. An exhaust heating apparatus (22) comprising:
a housing (27) def ining a firing chamber (30), the housing (27) being jointed to an exhaust pipe (23) defining an exhaust passage (23a), the exhaust pipe (23) being connectable between an internal combustion engine (10) and an exhaust emission purifier (26) ;
a fuel supply valve (28) for injecting fuel into the firing chamber (30) communicating with the exhaust passage (23a) through a junction port (23b) formed on a wall of the exhaust pipe (23); and
ignition means (29) including a heat generating portion (29a) for igniting the fuel injected into the firing chamber (30), the heat generating portion (29a) of the ignition means (29) being arranged in the vicinity of the downstream wall surface (27_{D}) in the housing (27),
wherein a part of the exhaust gas flowing in the exhaust passage (23a) flows from the junction port (23b) into the firing chamber (30) so that ignition of a mixture of exhaust gas and fuel injected into the firing chamber (30) generates a combustion gas that flows out from the junction port (23b) to the exhaust passage (23a) together with exhaust gas newly flowing into the firing chamber (30), and
an angle (θ₁) between a wall surface in the exhaust pipe (23) positioned upstream of the junction port (23b) in the exhaust passage (23a) and adjacent to the junction port (23b), and an upstream wall surface (27_{U}) in the housing (27) positioned upstream of the exhaust passage (23a), is set to an obtuse angle, and
an angle (θ₂) between a wall surface in the exhaust pipe (23) positioned downstream of the junction port (23b) in the exhaust passage (23a) and adjacent to the junction port (23b), and a downstream wall surface (27_{D}) in the housing (27) positioned downstream of the exhaust passage (23a), is set to an obtuse angle, and **characterized in that**
a posture of the fuel supply valve (28) is set to the downstream wall surface (27_{D}) in the housing (27) such that the fuel injected from the fuel supply valve (28) collides with the downstream wall surface (27_{D}) in the housing (27) and splashes toward the exhaust passage (23a) through the junction port (23b).

2. An exhaust heating apparatus as claimed in claim 1, wherein the housing (27) further defines a fuel injection chamber (31) communicating with the firing chamber (30), the fuel injection chamber (31) being further recessed from a section of the upstream wall surface (27a) of the housing (27) at a distance from the junction port (23b), and wherein the fuel supply valve (28) injects the fuel into the firing chamber (30) through the fuel injection chamber (31).

## Patentansprüche

1. Abgaserwärmungsvorrichtung (22), umfassend:
ein Gehäuse (27), das eine Brennkammer (30) definiert, wobei das Gehäuse (27) mit einem Auspuffrohr (23) verbunden ist, das einen Abgaskanal (23a) definiert, wobei das Auspuffrohr (23) zwischen einem Verbrennungsmotor (10) und einem Abgasemissionsreiniger (26) verbunden werden kann,
ein Kraftstoffzufuhrventil (28) zum Einspritzen von Kraftstoff in die Brennkammer (30), die über einen Abzweigkanal (23b), der in einer Wand des Auspuffrohres (23) ausgebildet ist, mit dem Abgaskanal (23a) in Strömungsverbindung steht, und
ein Zündmittel (29), das einen Wärmeerzeugungsabschnitt (29a) zum Zünden des in die Brennkammer (30) eingespritzten Kraftstoff enthält, wobei der Wärmeerzeugungsabschnitt (29a) des Zündmittels (29) in der Nähe der stromabwärtigen Wandfläche (27_{D}) in dem Gehäuse (27) angeordnet ist,
wobei ein Teil des in dem Abgaskanal (23a) strömenden Abgases von dem Abzweigkanal (23b) in die Brennkammer (30) strömt, so dass das Zünden eines Gemisches aus Abgas und in die Brennkammer (30) eingespritztem Kraftstoff ein Verbrennungsgas erzeugt, das zusammen mit Abgas, das neu in die Brennkammer (30) einströmt, aus dem Abzweigkanal (23b) zu dem Abgaskanal (23a) strömt, und
wobei ein Winkel (θ₁) zwischen einer Wandfläche in dem Auspuffrohr (23), die stromaufwärts des Abzweigkanals (23b) in dem Abgaskanal (23a) und neben dem Abzweigkanal (23b) positioniert ist, und einer stromaufwärtigen Wandfläche (27_{U}) in dem Gehäuse (27), die stromaufwärts des Abgaskanals (23a) positioniert ist, auf einen stumpfen Winkel eingestellt ist, und
wobei ein Winkel (θ₂) zwischen einer Wandfläche in dem Auspuffrohr (23), die stromabwärts des Abzweigkanals (23b) in dem Abgaskanal (23a) und neben dem Abzweigkanal (23b) positioniert ist, und einer stromabwärtigen Wandfläche (27_{D}) in dem Gehäuse (27), die stromabwärts des Abgaskanals (23a) positioniert ist, auf einen stumpfen Winkel eingestellt ist, und **dadurch gekennzeichnet, dass**
eine Lage des Kraftstoffzufuhrventils (28) relativ zu der stromabwärtigen Wandfläche (27_{D}) in dem Gehäuse (27) so eingestellt ist, dass der von dem Kraftstoffzufuhrventil (28) eingespritzte Kraftstoff mit der stromabwärtigen Wandfläche (27_{D}) in dem Gehäuse (27) kollidiert und durch den Abzweigkanal (23b) hindurch in Richtung des Abgaskanals (23a) spritzt.

2. Abgaserwärmungsvorrichtung nach Anspruch 1, wobei das Gehäuse (27) ferner eine Kraftstoffeinspritzkammer (31) definiert, die mit der Brennkammer (30) in Strömungsverbindung steht, wobei die Kraftstoffeinspritzkammer (31) ferner von einem Abschnitt der stromaufwärtigen Wandfläche (27a) des Gehäuse (27) in einer Entfernung von dem Abzweigkanal (23b) eingerückt ist, und wobei das Kraftstoffzufuhrventil (28) den Kraftstoff über die Kraftstoffeinspritzkammer (31) in die Brennkammer (30) einspritzt.

## Revendications

1. Appareil de chauffage d'échappement (22) comprenant :
un boîtier (27) définissant une chambre de mise à feu (30), le boîtier (27) étant assemblé à un tuyau d'échappement (23) définissant un passage d'échappement (23a), le tuyau d'échappement (23) pouvant être raccordé entre un moteur à combustion interne (10) et un purificateur d'émission d'échappement (26) ;
une soupape d'alimentation en carburant (28) pour injecter du carburant dans la chambre de mise à feu (30) communiquant avec le passage d'échappement (23a) par un orifice de jonction (23b) formé sur une paroi du tuyau d'échappement (23) ; et
des moyens d'allumage (29) comprenant une partie de génération de chaleur (29a) pour allumer le carburant injecté dans la chambre de mise à feu (30), la partie de génération de chaleur (29a) des moyens d'allumage (29) étant agencée à proximité de la surface de paroi en aval (27_{D}) dans le boîtier (27),
dans lequel une partie du gaz d'échappement s'écoulant dans le passage d'échappement (23a) s'écoule à partir de l'orifice de jonction (23b) dans la chambre de mise à feu (30) de sorte que l'allumage d'un mélange de gaz d'échappement et de carburant injecté dans la chambre de mise à feu (30) génère un gaz de combustion qui s'écoule de l'orifice de jonction (23b) au passage d'échappement (23a) conjointement avec le gaz d'échappement qui vient de s'écouler récemment dans la chambre de mise à feu (30), et
un angle (θ₁) entre une surface de paroi dans le tuyau d'échappement (23) positionné en amont de l'orifice de jonction (23b) dans le passage d'échappement (23a) et adjacente à l'orifice de jonction (23b), et une surface de paroi en amont (27_{U}) dans le boîtier (27) positionné en amont du passage d'échappement (23a), est un angle obtus, et
un angle (θ₂) entre une surface de paroi dans le tuyau d'échappement (23) positionné en aval de l'orifice de jonction (23b) dans le passage d'échappement (23a) et adjacente à l'orifice de jonction (23b), et une surface de paroi en aval (27_{D}) dans le boîtier (27) positionné en aval du passage d'échappement (23a), est un angle obtus, et **caractérisé**
**en ce que**
une position de la soupape d'alimentation en carburant (28) est déterminée sur la surface de paroi en aval (27_{D}) dans le boîtier (27) de sorte que le carburant injecté à partir de la soupape d'alimentation de carburant (28) heurte la surface de la paroi en aval (27_{D}) dans le boîtier (27) et éclabousse vers le passage d'échappement (23a) à travers l'orifice de jonction (23b).

2. Appareil de chauffage d'échappement selon la revendication 1, dans lequel le boîtier (27) définit en outre une chambre d'injection de carburant (31) communiquant avec la chambre de mise à feu (30), la chambre d'injection de carburant (31) étant en outre renfoncée à partir d'une section de la surface de paroi en amont (27a) du boîtier (27) à une distance de l'orifice de jonction (23b), et dans lequel la soupape d'alimentation en carburant (28) injecte le carburant dans la chambre de mise à feu (30) par la chambre d'injection de carburant (31).
